(19) Europäisches Patentamt
European Patent Office
Office européen des brevets

(11) **EP 4 756 708 A1**

(12) **EUROPEAN PATENT APPLICATION**
published in accordance with Art. 153(4) EPC

(43) Date of publication:
**10.06.2026 Bulletin 2026/24**

(21) Application number: **24860520.6**

(22) Date of filing: **01.08.2024**

(51) International Patent Classification (IPC):
$G06T\ 5/80^{(2024.01)}$    $G02B\ 27/01^{(2006.01)}$
$G06T\ 3/18^{(2024.01)}$    $G06T\ 7/30^{(2017.01)}$

(52) Cooperative Patent Classification (CPC):
**G02B 27/01; G06T 3/00; G06T 3/18; G06T 5/00; G06T 5/80; G06T 7/30**

(86) International application number:
**PCT/KR2024/095958**

(87) International publication number:
**WO 2025/048604 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.08.2023 KR 20230114629**

(71) Applicant: **Epitone, Inc.**
**Carlsbad, CA 92010 (US)**

(72) Inventors:
- **KWON, Se Yong**
  **Incheon 21982 (KR)**
- **YANUSIK, Igor**
  **Incheon 22002 (KR)**
- **PARK, Hee Won**
  **Incheon 22008 (KR)**

(74) Representative: **RGTH**
**Patentanwälte PartGmbB**
**Mönckebergstraße 11**
**20095 Hamburg (DE)**

(54) **METHOD FOR COMPENSATING FOR DISTORTION OF HUD IMAGES CAUSED BY WINDSHIELD AND DEVICE THEREFOR**

(57)    An aspect of the present invention relates to a method and a device for compensating for distortion of head up display (HUD) images, wherein distortion caused by the windshield is compensated for such that the 3D HUD displays correct 3D images. The method may comprise at least one of: a step of preparing a marker image having a marker for detection in a predetermined position on a display panel; a step of preparing a view image that expresses subpixels to which a setting value is allocated so as to have a specific period; a step of securing an image through an optical simulation or an actual camera by reflecting the marker image and/or the view image on a windshield; and a step of securing a parameter of a regression equation for calculating warping and/or view mapping from the secured image. The present invention may provide a HUD device capable of producing correct 3D HUD images free from distortion caused by the windshield by performing a warping process of compensating for shape distortion of a virtual object entering the driver's field of view through the windshield in real time and/or a view mapping process of compensating for path distortion of light entering the driver's field of view through the windshield.

FIG. 1

START

PREPARE MARKER IMAGE — S100

OBTAIN IMAGE — S110

GENERATE WARPING FUNCTION — S120

END

## Description

### TECHNICAL FIELD

Aspects of the disclosure relate to a method and device which compensate for distortion for distortion in head-up display (HUD) images for correct display of three-dimensional (3D) images on a 3D HUD by compensating for distortion caused by the windshield.

### BACKGROUND ART

The information disclosed in this section is only provided for an understanding of background information of embodiments of the disclosure and should not be taken as a description of the prior art.

HUD (Head-Up Display) technology has been fully commercialized in 2D forms and is internally equipped in a number of vehicles. By using a large-screen 3D HUD, drivers may see instrument panels, road markings, navigation guidance, and the like more comfortably and safely.

Although 3D HUDs may be implemented in various ways, one approach involves projecting a 3D display onto the windshield for viewing. Methods of rendering images on existing 3D displays (lightfield rendering, enabling different images to be seen depending on the viewing angle) are well-known.

However, when viewing a 3D display reflected on the windshield, the curved surface of the windshield causes distortion in the shapes of objects in the video played on the 3D display. The light path is also bent away from the original direction, thereby making it impossible to see a correct 3D image.

Therefore, to enable viewing of correct 3D images, the development of a distortion compensation method which compensates for the distortion of the shapes of objects in the image and also compensates for the light path is urgently needed.

The information disclosed in the Background section is technical information that the inventors possessed for, or acquired during, derivation of embodiments of the disclosure and should not be taken as known technology disclosed to the public before the filing of the embodiments of the disclosure.

### DISCLOSURE

#### Technical Problem

Accordingly, the disclosure has been made in consideration of the above-described problems occurring in the related art, and the disclosure proposes a distortion compensation method which enables viewing of correct three-dimensional (3D) images without distortion caused by the windshield by compensating for the shape distortion of objects in an image and compensating for light paths.

The distortion compensation method proposed in the disclosure may be applied to the windshields of various vehicle types and display accurate 3D images without distortion in a head-up unit (HUD) using a 3D display which is capable of light field rendering and has a parallax barrier, lenticular lenses, or a similar structure.

Another objective of the disclosure is to provide an HUD device which performs the distortion compensation method, and to provide a computer program stored on a medium which, when combined with hardware, executes the distortion compensation method.

The objectives of the disclosure are not limited to the foregoing description, and other objectives not explicitly disclosed herein will be clearly understood by a person having ordinary skill/knowledge in the art from the description provided hereinafter.

#### Technical Solution

In order to achieve at least one of the above objectives, an aspect (or first embodiment) of the disclosure may provide method for compensating for distortion in HUD images, the method including at least one of: preparing a marker image including a plurality of markers displayed at selected positions on a display panel;

> obtaining an image through optical simulation or image capturing using a camera after reflecting the marker image on the windshield; and
> generating a warping function for calculating warping from the image.

In some embodiments, in the preparing of the marker image, the marker image may include an image in which a plurality of markers are provided.

In some embodiments, the plurality of markers may be arranged in a grid pattern at uniform distances from each other.

In some embodiments, the optical simulation or the image capturing using the camera may be performed at a plurality of viewpoints.

In some embodiments, the plurality of viewpoints may include viewpoints seen at a plurality of points positioned in a virtual eye box.

In some embodiments, the plurality of points may be arranged in the eye box at uniform distances from each other.

In some embodiments, the warping function may have, as input parameters, eye positions corresponding to a plurality of viewpoints in the optical simulation or the image capturing using the camera and pixel positions corresponding to the markers of the marker image and, as output parameters, compensated pixel positions corresponding to the image which is distortion-compensated.

In some embodiments, the compensated pixel position may be implemented for content corresponding to the left eye of a user and for content corresponding to the right eye of the user.

In some embodiments, the warping may include compensating for distortion in the shape of a virtual object visible to a user through the windshield.

In some embodiments, the method may include preparing a view image.

In some embodiments, the obtaining of the image may include obtaining the image through the optical simulation or the image capturing using the camera after reflecting the marker image and the view image on the windshield.

In some embodiments, the method may include generating a mapping function for calculating view mapping from the image.

In some embodiments, the mapping function may have, as input parameters, eye positions corresponding to a plurality of viewpoints in the optical simulation or the image capturing using the camera and pixel positions corresponding to the markers of the marker image and, as output parameters, a view number visible to eyes of a user.

In some embodiments, the view number visible to the eyes of the user may be implemented for content corresponding to the left eye of the user and content corresponding to the right eye of the user, respectively.

In some embodiments, the view mapping may include compensating for distortion in a path of light which enters the eyes of the user through the windshield.

In some embodiments, the view image may include an image having subpixels which are turned on at specific periods.

In some embodiments, subpixels belonging to a same period among the subpixels may have light paths which are tilted in different directions by a parallax barrier or lenticular lenses.

In some embodiments, the period and degrees of the tilts may be determined in advance by the parallax barrier or the lenticular lenses.

Another aspect (or second embodiment) of the disclosure may provide a method for compensating for distortion in HUD images, the method including at least one of:

preparing a view image;
obtaining an image through optical simulation or image capturing using a camera after reflecting the view image on a windshield; and
generating a mapping function for calculating view mapping from the image

In some embodiments, the view image may include an image having subpixels which are turned on at specific periods.

In some embodiments, subpixels belonging to a same period among the subpixels may have light paths which are tilted in different directions by a parallax barrier or lenticular lenses.

In some embodiments, the period and degrees of the tilts may be determined in advance by the parallax barrier or the lenticular lenses.

In some embodiments, the optical simulation or the image capturing using the camera may be performed at a plurality of viewpoints.

In some embodiments, the plurality of viewpoints may include viewpoints seen at a plurality of points positioned in a virtual eye box.

In some embodiments, the plurality of points may be arranged in the eye box at uniform distances from each other.

In some embodiments, the mapping function may have, as input parameters, eye positions corresponding to a plurality of viewpoints in the optical simulation or the image capturing using the camera and pixel positions corresponding to the markers of the marker image and, as output parameters, a view number visible to eyes of a user.

In some embodiments, the compensated pixel position may be implemented for content corresponding to the left eye of a user and for content corresponding to the right eye of the user.

In some embodiments, the warping may include compensating for distortion in the shape of a virtual object visible to a user through the windshield.

Another aspect (or third embodiment) of the disclosure may provide a method for compensating for distortion in HUD images, the method including:

preparing a marker image;

preparing a view image;

obtaining an image through optical simulation or image capturing using a camera after reflecting the marker image and the view image on a windshield; and

generating a warping function for calculating warping and view mapping from the image.

In some embodiments, in the preparing of the marker image, the marker image may include a plurality of markers.

In some embodiments, the plurality of markers may be arranged in a grid pattern at uniform distances from each other.

In some embodiments, the view image may include an image having subpixels which are turned on at specific periods.

In some embodiments, subpixels belonging to a same period among the subpixels may have light paths which are tilted in different directions by a parallax barrier or lenticular lenses.

In some embodiments, the period and degrees of the tilts may be determined in advance by the parallax barrier or the lenticular lenses.

In some embodiments, the optical simulation or the image capturing using the camera may be performed at a plurality of viewpoints.

In some embodiments, the plurality of viewpoints may include viewpoints seen at a plurality of points positioned in a virtual eye box.

In some embodiments, the function may include a first function for calculating the warping and a second function for calculating the view mapping.

In some embodiments, the first function may have, as input parameters, eye positions corresponding to a plurality of viewpoints in the optical simulation or the image capturing using the camera and pixel positions corresponding to the markers of the marker image and, as output parameters, compensated pixel positions corresponding to the image which is distortion-compensated.

In some embodiments, the compensated pixel position may be implemented for content corresponding to the left eye of a user and for content corresponding to the right eye of the user.

In some embodiments, the second function has, as input parameters, eye positions corresponding to a plurality of viewpoints in the optical simulation or the image capturing using the camera and pixel positions corresponding to the markers of the marker image and, as output parameters, a view number visible to eyes of a user.

In some embodiments, the view number visible to the eyes of the user may be implemented for content corresponding to the left eye of the user and content corresponding to the right eye of the user, respectively.

In some embodiments, the warping may include compensating for distortion in the shape of a virtual object visible to a user through the windshield.

In some embodiments, the view mapping may include compensating for distortion in a path of light which enters the eyes of the user through the windshield.

Another aspect of the disclosure may provide an HUD device using the aforementioned method.

Another aspect of the disclosure may provide a computer program stored on a medium for executing, in combination with hardware, the aforementioned method.

**Advantageous Effects**

As set forth above, embodiments of the disclosure provide a distortion compensation method which enables viewing of correct 3D images without distortion caused by the windshield by compensating for the shape distortion of objects in an image and compensating for light paths.

The distortion compensation method proposed in the disclosure may be applied to the windshields of various vehicle types and display accurate 3D images without distortion in an HUD using a 3D display which is capable of light field rendering and has a parallax barrier, lenticular lenses, or a similar structure.

The effectiveness of the distortion compensation method lines in different degrees of distortion in the shape or the light path depending on the viewing angle, thereby enabling a correct image to appear straight on a specific plane in space, regardless of the viewing angle, and the image to be accurately delivered to both the left and right eyes. When the differently distorted shapes are seen by both eyes, the image may not be perceived as a single object. When the images are not accurately projected to both eyes, the 3D image may not be viewed properly and may even cause dizziness. The distortion compensation method according to the disclosure may resolve these problems.

Furthermore, in the distortion compensation method according to the disclosure, warping and view mapping may be performed on a parallel processing device and may also be performed simultaneously. Accordingly, short execution time may be obtained, thereby resulting in the effect of low latency.

In addition, the disclosure has a variety of effects with excellent versatility depending on the embodiment, and such effects may be clearly understood from the following description of embodiments.

## DESCRIPTION OF DRAWINGS

The following drawings accompanying the specification illustrate embodiments of the disclosure and, together with the foregoing disclosure, serve to provide further understanding of the technical spirit of the disclosure, and thus, the disclosure should not be construed as being limited to the drawings, wherein:

FIG. 1 illustrates a method for compensating for distortion in HUD images caused by the windshield according to a first embodiment of the disclosure;
FIG. 2 illustrates the method for compensating for distortion in HUD images caused by the windshield according to a first embodiment of the disclosure shown in FIG. 1 which further includes a view image preparing operation and a mapping function generating operation;
FIG. 3 illustrates a method for compensating for distortion in HUD images caused by the windshield according to a second embodiment of the disclosure;
FIG. 4 illustrates the method for compensating for distortion in HUD images caused by the windshield according to a first embodiment of the disclosure shown in FIG. 3 which further includes a marker image preparing operation and a warping function generating operation;
FIG. 5 illustrates a method for compensating for distortion in HUD images caused by the windshield according to a third embodiment of the disclosure;
FIG. 6 illustrates a diagram in which a marker image generated by a display panel is being captured using a camera after reflected on the windshield;
FIG. 7 illustrates a marker image according to an embodiment of the disclosure;
FIG. 8 illustrates a distorted image viewed from a virtual driver perspective, which is produced by generating a marker image shown in FIG. 7 on a panel and causing the same to be reflected on the windshield;
FIG. 9 illustrates overlapping of a distorted image shown in FIG. and a target image compensated through warping;
FIG. 10 illustrates a view image according to an embodiment of the disclosure;
FIG. 11 illustrates an actual view image on a display in which subpixels may be viewed separately;
FIG. 12 illustrates an eye box according to an embodiment of the disclosure;
FIG. 13 illustrates a view image of a pixel having a specific number on a panel when the pixels are turned on;
FIG. 14 illustrates an example of view numbers of respective pixels of a display panel;
FIG. 15 illustrates a fifth view image according to an embodiment of the view image;
FIG. 16 illustrates a first view image according to an embodiment of the view image;
FIG. 17 illustrates a ninth view image according to an embodiment of the view image;
FIG. 18 illustrates light paths for view images according to embodiments of the disclosure; and
FIG. 19 illustrates a view mapping method according to embodiments of the disclosure.

## MODE FOR INVENTION

Advantages and features of the disclosure, as well as methods of realizing the same, will be more clearly understood from the following detailed description of embodiments when taken in conjunction with the accompanying drawings. However, the disclosure is not limited to specific embodiments to be described hereinafter but should be understood as including a variety of modifications, equivalents, and alternatives within the spirit and scope of the disclosure. Rather, these embodiments are provided so that the description of the disclosure will be complete and will fully convey the scope of the disclosure to a person having ordinary skill in the art in the technical field to which the disclosure pertains. In the following description of the disclosure, a detailed description of related known technology will be omitted when the description may render the subject matter of the disclosure unclear.

The terminology used herein is for the purpose of describing particular embodiments only and is not intended to be limiting. As used herein, the singular forms are intended to include the plural forms as well, unless the context clearly indicates otherwise.

Terms, such as "comprise/include" or "have," or the like, as used herein, indicate that a feature, a number, a step, an operation, a component, a part or a combination thereof described in the disclosure is present, but do not preclude the possibility of the presence or addition of one or more other features, numbers, steps, operations, components, parts or combinations thereof in advance. It will be understood that the terms "first", "second", "A", "B", etc., may be used herein to describe various elements, but these elements should not be limited by these terms. These terms are only used to distinguish one element from another element.

Hereinafter, embodiments according to the disclosure will be described in detail with reference to the accompanying drawings, in which identical or similar constituent elements/components are given the same reference numerals, and repeated descriptions thereof will be omitted.

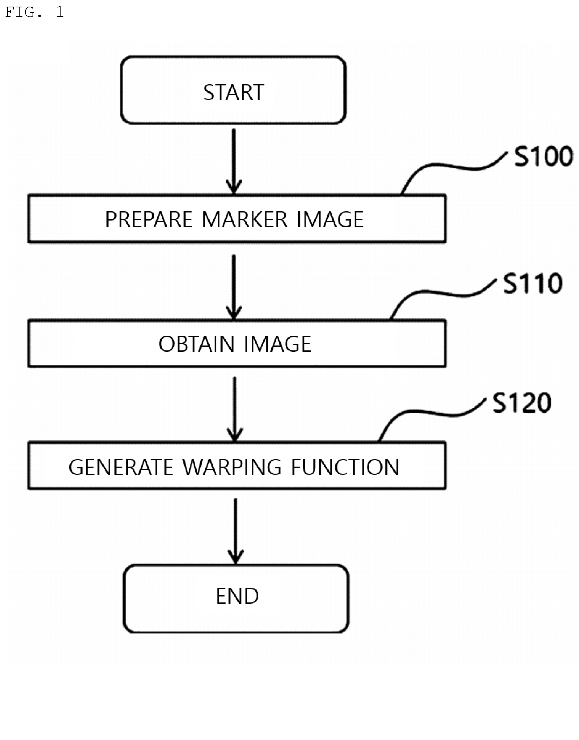

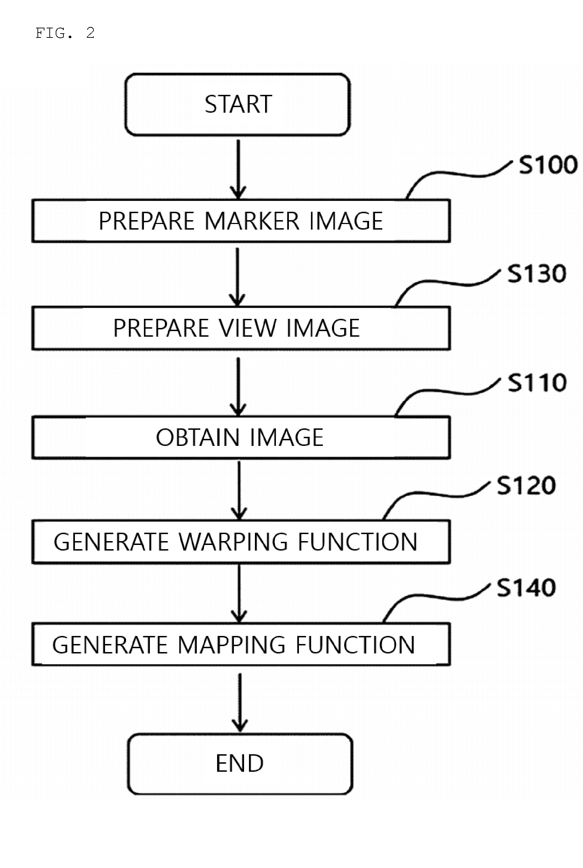

FIG. 1 illustrates a method for compensating for distortion in HUD images caused by the windshield according to a first embodiment of the disclosure. FIG. 2 illustrates the method for compensating for distortion in HUD images caused by the windshield according to a first embodiment of the disclosure shown in FIG. 1 which further includes a view image preparing operation and a mapping function generating operation.

Referring to FIGS. 1 and 2, an aspect (or first embodiment) of the disclosure may provide a method for compensating for distortion in HUD images which includes at least one of: first embodiment) of the disclosure may provide a method for compensating for distortion in HUD images which includes at least one of: a marker image preparing operation S100 of preparing a marker image including a plurality of markers 110 displayed at selected positions on a display panel;

> an image obtaining operation S110 of obtaining an image through optical simulation or image capturing using a camera after reflecting the marker image on the windshield; and
> a warping function generating operation S120 of generating a warping function for calculating warping from the image.

Some embodiments may further include a view image preparing operation S130 of preparing a view image. In this case, some embodiments may further include a mapping function generating operation S140 of generating a mapping function for calculating view mapping from the image.

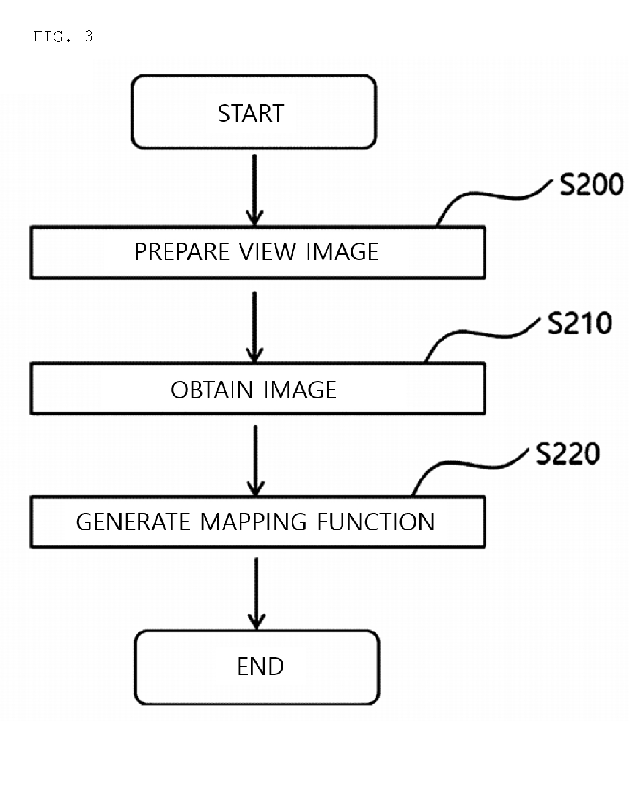

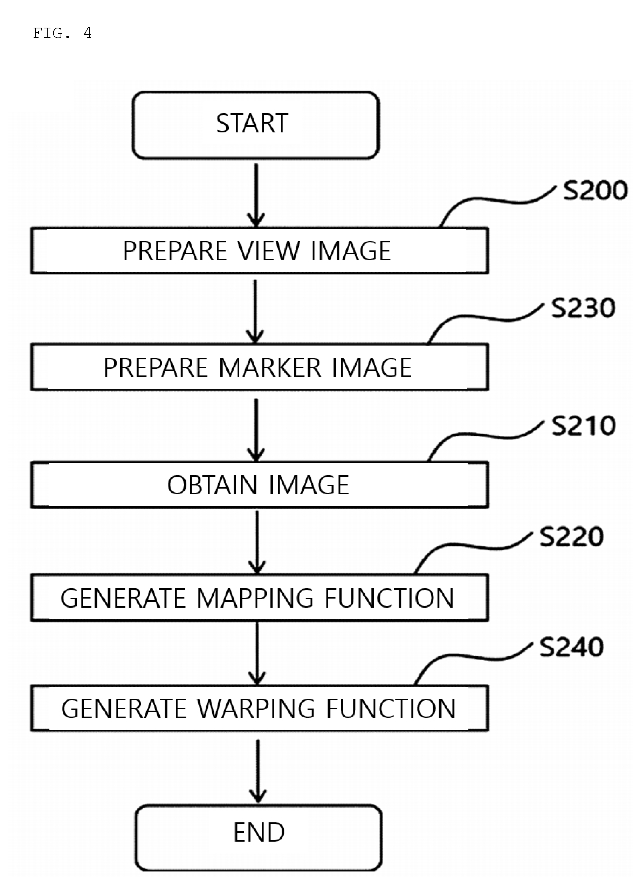

FIG. 3 illustrates a method for compensating for distortion in HUD images caused by the windshield according to a second embodiment of the disclosure. FIG. 4 illustrates the method for compensating for distortion in HUD images caused by the windshield according to a first embodiment of the disclosure shown in FIG. 3 which further includes a marker image preparing operation and a warping function generating operation.

Referring to FIGS. 3 and 4, the second embodiment of the disclosure may provide a method for compensating for distortion in HUD images caused by the windshield, the method including at least one of:

> a view image preparing operation S200 of preparing a view image;
> an image preparing operation S210 of obtaining an image through optical simulation or image capturing using a camera after reflecting the view image on the windshield; and
> a mapping function generating operation S220 of generating a mapping function for calculating view mapping from the image.

Some embodiments may include a marker image preparing operation S230 of preparing a marker image including a plurality of markers 110 which are displayed at selected positions of a display panel. Some embodiments may further include a warping function generating operation S240 of generating a warping function for calculating warping from the image.

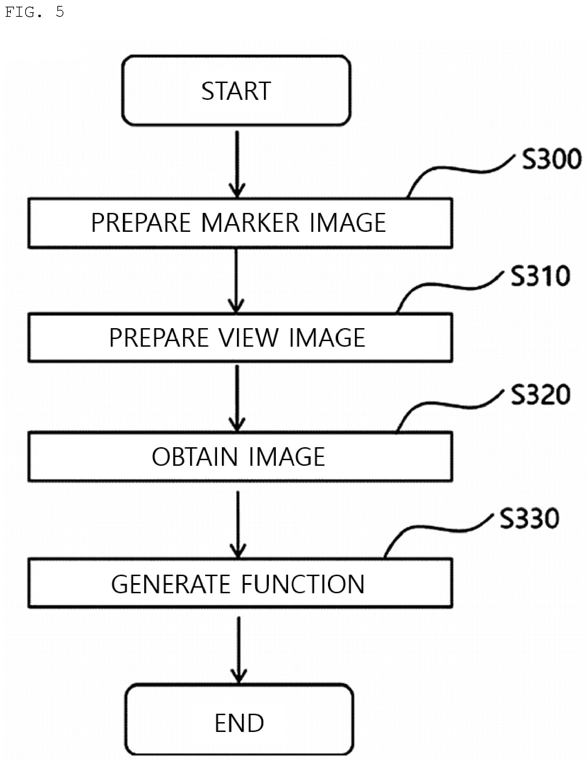

FIG. 5 illustrates a method for compensating for distortion in HUD images caused by the windshield according to a third embodiment of the disclosure.

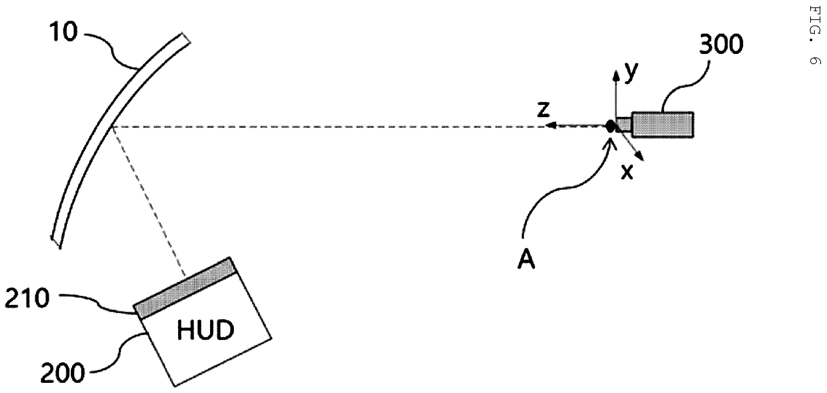

FIG. 6 illustrates a diagram in which a marker image generated by a display panel is being captured using a camera after reflected on the windshield.

In the disclosure, a display panel 210 may be a component disposed in the HUD device 200. The HUD device 200 may include a device which is disposed in a vehicle or similar device and projects light beams containing images to display the images to the driver. Here, the result of reflection is viewed from the viewpoint A of the camera. According to another embodiment, the result may be implemented through calculation via optical simulation instead of a camera.

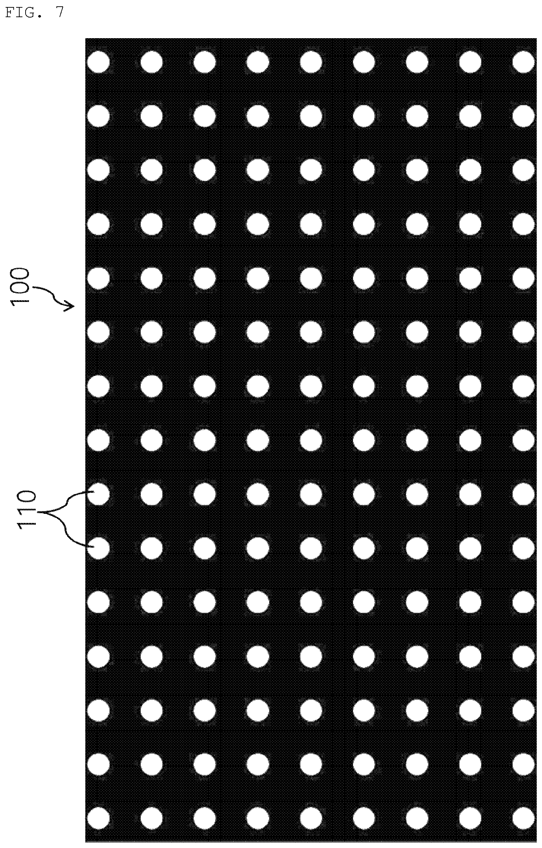

FIG. 7 illustrates a marker image according to an embodiment of the disclosure.

Referring to FIGS. 5 to 7, a third embodiment of the disclosure may provide a method for compensating for distortion in HUD images caused by a windshield 10, the method including at least one of:

> a marker image preparing operation S300 of preparing a marker image 100;
> a view image preparing operation S310 of preparing a view image;
> an image obtaining operation S320 of obtaining an image through optical simulation or image capturing using a camera 300 after reflecting the view image on the windshield 10; and
> a function generating operation S330 of generating a function of calculating warping and view mapping from the image.

In the third embodiment, both the marker image 100 and the view image are included. The first embodiment describes the method for compensating for distortion in HUD images which includes the warping operation related to the marker image 100. The second embodiment describes the method for compensating for distortion in HUD images which includes the mapping operation related to the view image.

Hereinafter, the third embodiment will be mainly described in this specification. Because the first and second embodiments possess substantially the same technical concept as the third embodiment, detailed descriptions of the first and second embodiments are omitted and replaced by the description of the third embodiment.

Referring to FIG. 5, a method for compensating for distortion in HUD images caused by the windshield 10 according to embodiments of the disclosure may include:

a marker image preparing operation of preparing a marker image 100; a view image preparing operation S310 of preparing a view image; and an image obtaining operation S320 of obtaining an image by optical simulation or image capturing using the camera 300 after the marker image 100 and the view image are reflected on the windshield 10; and a function generating operation S330 of generating a function of calculating warping and view mapping from the image.

In this specification, the warping may include compensating for distortion in the shape of a virtual object visible to the user through the windshield 10. The view mapping may include compensating for distortion in the path of light which enters the eyes of the user through the windshield 10. Here, in some embodiments, the virtual object may refer to a 2D or 3D image visible to the user through the windshield 10, which is generated on the display panel 210 of the HUD device 200.

Referring to FIG. 7, in some embodiments, the marker image 100 in the marker image preparing operation S300 may include an image in which a plurality of markers 110 are formed. The marker image 100 may include an image form in which of a plurality of markers 110 represented as white points are arranged on a black background. The marker image 100 may be electronically implemented by assigning set values corresponding to the markers 110 to pixels, or may be mechanically or chemically implemented using a film or the like on which the markers 110 are displayed.

The markers 110 implemented in the marker image 100 each have position coordinates. Therefore, the user may determine the position information of the corresponding markers 110 in the marker image 100 based on the position coordinates. It is desirable that a plurality of markers 110 are prepared. When the plurality of markers 110 are arranged as densely as possible, the accuracy of distortion compensation may be improved. In some embodiments, the respective markers 110 displayed in the marker image 100 may be arranged in a grid pattern at uniform distances from each other. By arranging the plurality of markers 110 in a grid pattern at uniform distances, the accuracy of compensation for the distortion caused by the windshield 10 may be improved. Here, arranging in a grid pattern may include placing the plurality of markers 110 at right angles to each other at uniform horizontal and vertical distances.

Generally, when the HUD has a flat display panel 210, it is desirable to arrange the markers 110 so that the markers may fill the entire area of the panel 210. It is more desirable that a plurality of markers 110 cover most of the area of the panel 210 and have a selected period.

The markers 110 may serve as reference points or the like. When the marker image 100 displaying the markers 110 is implemented on the panel 210 of the HUD, the implemented marker image 100 may be reflected through the windshield 10 and enter the eyes of the user. Here, the user may include, for example, the driver of the vehicle in which the HUD is used.

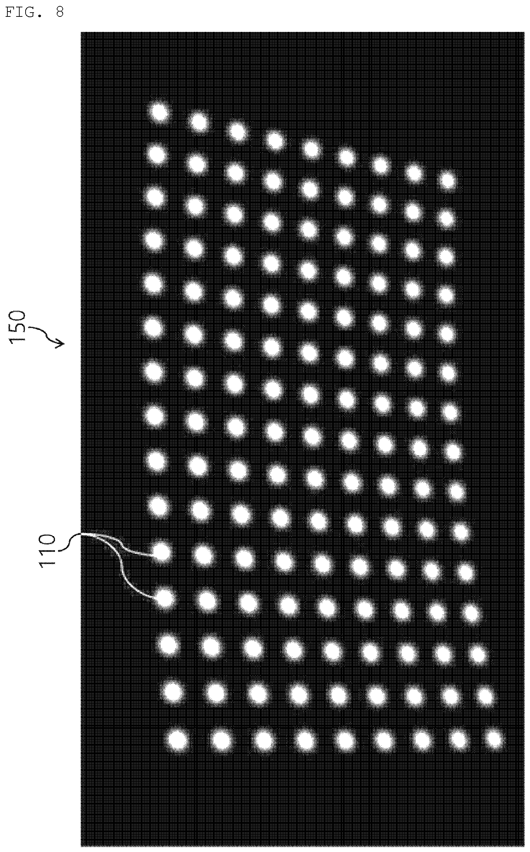

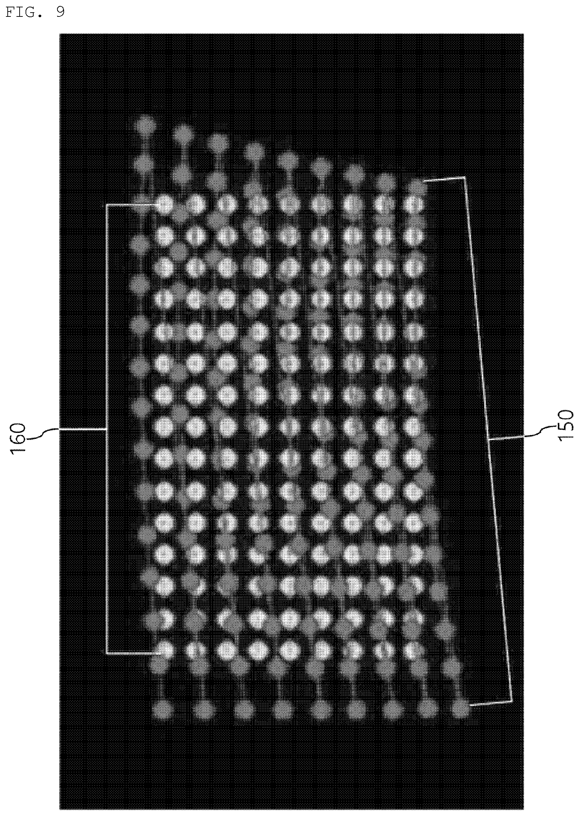

FIG. 8 illustrates a distorted image 150 viewed from a virtual driver perspective, which is produced by generating a marker image shown in FIG. 7 on a panel and causing the same to be reflected on the windshield, and FIG. 9 illustrates overlapping of a distorted image shown in FIG. and a target image 160 compensated through warping.

In this specification, the reference numeral 150 in FIG. 9 indicates blue markers enclosed in brackets in FIG. 9, but in this specification, it is intended to indicate the distorted image, which is the marker image in which the corresponding markers are displayed. The reference numeral 160 in FIG. 9 indicates red markers enclosed in brackets in FIG. 9, but in this specification, it is intended to indicate the target image, which is the marker image in which the corresponding red markers are displayed.

Here, in some embodiments, the distorted image 150 may refer to the marker image 100 which is displayed on the panel 210 and reflected on the windshield so that the positions of the markers 110 appear distorted.

Here, the target image 160 may refer to the image appearing undistorted on the windshield 10 when viewed from the perspective of the driver seated in the driver's seat. This target image 160 may refer to the wrapped image.

To clarify, for the HUD device 200 to display the target image 160, the marker image 100 generated on the panel 210 must exist in a distorted form. That is, when the marker image generated on the panel is undistorted from the start, the undistorted marker image reflected on the windshield will appear as a distorted image from the driver's perspective. Conversely, when the image visible to the driver is an undistorted correct image, to display the correct image reflected on the windshield 10, the marker image on the panel 210 of the HUD device 200 which generates and projects an image must be a distorted image from the start. Here, the correct image is the target image 160.

The marker image 100 reflected through the windshield 10 is distorted due to the curved surface of the windshield 10 before reaching the eyes of the user, thereby preventing the user from seeing a correct 2D or 3D image. Therefore, this distortion of the marker image 100 must be corrected. In this specification, correcting this distortion of the marker image 100 is defined as warping. In some embodiments, warping in this specification may refer to correcting the shape distortion of a virtual 2D or 3D object realized through the windshield 10.

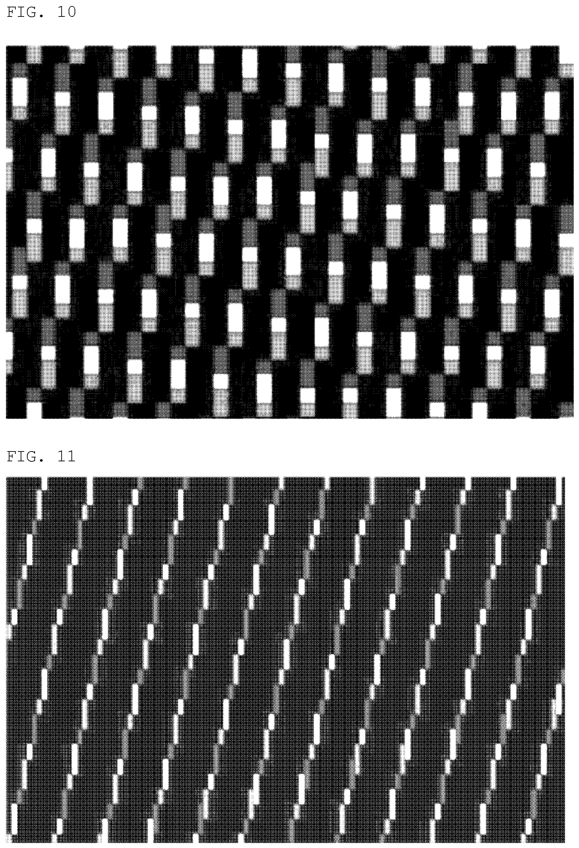

FIG. 10 illustrates a view image. Referring to FIG. 10, the view image according to an embodiment of the disclosure represents an image having subpixels which are turned on at specific periods on a black background. The image in FIG. 10 is generated when the subpixel structure of the display is in RGB order.

FIG. 11 illustrates an actual view image on a display in which subpixels may be viewed separately.

In some embodiments, the view image may include subpixels turned on at specific periods on a black background. In some embodiments, subpixels belonging to the same period may have light paths which are tilted in different directions by a parallax barrier or lenticular lenses.

In some embodiments, the specific period and the degrees of tilts of the light paths may be determined in advance by the parallax barrier or the lenticular lenses formed on the panel 210.

Here, the number of views in the view image may be arbitrarily determined in advance by the setter. The setter mentioned here may refer to the designer designing the method for compensating for distortion in HUD images according to the disclosure.

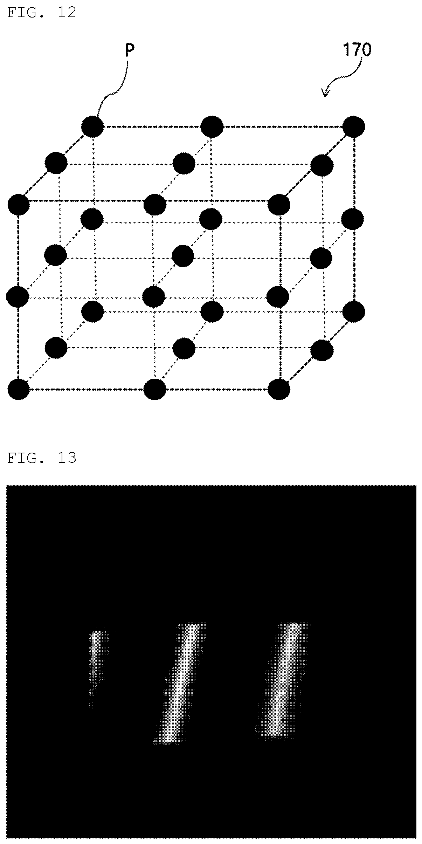

FIG. 12 illustrates an eye box according to an embodiment of the disclosure.

In some embodiments, optical simulation or image capturing using the camera 300 may be performed at a plurality of viewpoints A. Furthermore, the plurality of viewpoints A may include viewpoints A seen at a plurality of points P positioned in a virtual eye box 170. For example, while the plurality of points P are expressed as 3*3*3 in embodiments described herein, this is merely illustrative. Once the transformation functions (such as first and second functions) are determined, values (such as image information and transformation function information) between points P and P may also be calculated using methods such as interpolation.

For example, referring to FIGS. 8 and 9, when the marker image 100 is displayed on the panel 210 and reflected on the windshield 10, a distorted marker image, i.e., the distorted image 150, is generated due to the curved surface of the windshield 10. The distorted image 150 may be captured using the camera 300 in the eye box 170 to obtain an image or optical simulation may be performed to obtain an image. Here, the position coordinates of the plurality of markers 110 on the distorted image 150 may correspond to the position coordinates of pixels corresponding to the marker image 100 displayed on the panel 210 of the HUD. The position coordinates of the pixels may correspond to the position coordinates of the markers 110 in the marker image 100. In this specification, the position coordinates of the pixels corresponding to the position coordinates of the marker image 100 are denoted as Px and Py.

In this case, images reflected on the windshield 10 at a plurality of points P in the eye box 170 may be captured using the camera 300 or generated by performing optical simulation.

Because the camera 300 has intrinsic parameters, knowing the position and orientation of the camera 300 enables determining which pixel positions on the panel 210 correspond to the spatial positions of the points P. Here, intrinsic parameters refer to internal values such as focal length of the camera.

Here, the eye box 170 refers to a virtual space where the position coordinates of the virtual eyes of the driver are distributed in a 3D space.

In some embodiments, when the setter arbitrarily sets the eye box 170 to 3*3*3, a total of 27 points P are formed, and each point P may be the viewpoint A of the camera 300. That is, images viewed from the respective 27 points P may be captured. When viewing the distorted image 150 and the target image 160 from the respective points P, the viewpoints from the respective points P must necessarily differ, and thus a total of 27 images may be obtained.

The position coordinates of point P forming eye position A, i.e., eye box 170, may be expressed in this specification as coordinates Ex, Ey, and Ez in a 3D space.

In this specification, the target image 160 may refer to a case in which the marker image 100, which is reflected and appears on the windshield 10, is a correct undistorted 3D image for the virtual eyes of the driver. In other words, the target image 160 may refer to the marker image 100 where the markers 110, which have the position coordinates the user wishes to see on the actual windshield 10, are distributed. Overlapping the target image 160 and the distorted image 150 allows obtaining transformation position coordinates which may convert each marker 110 on the distorted image 150 into a marker 110 positioned at the correct position on the target image 160. The video captured using the camera 300 is intended to obtain transformation coordinates which may be converted into the correct positions. Specifically, the transformation coordinates may represent the actual position coordinates of pixels which must be turned on in the panel 210 of the HUD to indicate the markers 110 correctly positioned on the target image 160.

In other words, the transformation position coordinates are data that enable the calculation of which pixels on the panel 210 of the HUD should be turned on in order to display an image, which is desired by the user, via the windshield 10.

Once set values are assigned to pixels on the panel 210 in this manner, when the image is reflected on the windshield 10 and displayed to the user, the reflected image may appear as the coordinates of the target markers 110 on the target image 160. The transformation position coordinates may be expressed as Wx and Wy in this specification.

The parameters of the first and second regression functions, which calculate warping and view mapping from the acquired images, may be obtained. Here, the first function may refer to the warping function in the first or second embodiment, and the second function may refer to the mapping function.

Here, the first and second functions may be regression equations that calculate a view number and the degree of warping when viewing a selected pixel on the display from a selected eye position by taking a total of five parameters: eye positions Ex, Ey, and Ez and pixel positions Px and Py.

In some embodiments, the aforementioned function may include a first function for calculating warping and a second function for calculating view mapping. Here, the first function may be a type of regression equation that may have, as input parameters, the eye positions corresponding to the plurality of viewpoints A in the optical simulation or the image capturing using the camera 300 and the pixel positions corresponding to the markers 110 of the marker image 100 and, as output parameters, the compensated pixel positions corresponding to the distortion-compensated image. Here, the compensated pixel positions may refer to the aforementioned transformation position coordinates.

The first function may be expressed by the following Equation 1.

[Equation 1]

$$f(Ex, Ey, Ez, Px, Py) = (Wx, Wy)$$

When images are acquired by image capturing using the camera 300 or by optical simulation, the output parameters Wx and Wy may be obtained. At this point, because the eye position and the pixel position are already known values, the five parameters, which include the eye position (Ex, Ey, Ez) and the pixel position (Px, Py), form two parameters of the transformation position coordinates (Wx, Wy) and a data set. Because this data set is generated for each marker 110 on the marker image 100, the number of data sets obtained may be the same as the number of the markers 110 on the marker image 100. Therefore, in this embodiment, 135 data sets may be obtained because the marker image 100 includes 9*15=135 markers 110.

Here, the eye position (Ex, Ey, Ez) may include the left eye position and the right eye position because the subpixels are assigned to either the left eye or the right eye. Reflecting the results of assigning to the subpixels, the eye position includes the left eye position ($Ex_L$, $Ey_L$, $Ez_L$) and the right eye position ($Ex_R$, $Ey_R$, $Ez_R$).

Because Equation 1 for the left eye position is $f(Ex_L, Ey_L, Ez_L, Px, Py) = (Wx_L, Wy_L)$, the left eye transformation position coordinates ($Wx_L$, $Wy_L$) are obtained from the left eye position. Because Equation 1 for the right eye position is $f(Ex_R, Ey_R, Ez_R, Px, Py) = (Wx_R, Wy_R)$, the right eye transformation position coordinates ($Wx_R$, $Wy_R$) are obtained from the right eye position.

The first function, which is a regression equation, may be obtained from the data set obtained in this manner. For reference, because there are two output parameters Wx and Wy, two first functions may be created: one for Wx and one for Wy. The compensated pixel position may be implemented for content corresponding to the left eye of the user and for content corresponding to the right eye of the user.

Here, like the first function, the second function may have, as input parameters, the eye positions corresponding to the plurality of viewpoints A in the optical simulation or the image capturing using the camera 300 and the pixel positions corresponding to the markers 110 of the marker image 100 and, as an output parameter, a view number visible to the eyes of the user. The difference between the process of creating the second function and the process of creating the first function is that the first function has the pixel positions as the output parameters, whereas the second function has the view number as the output parameter. Here, the pixel positions consist of two values, i.e., the X-coordinate and the Y-coordinate, on a plane coordinate system, whereas view number is a single value.

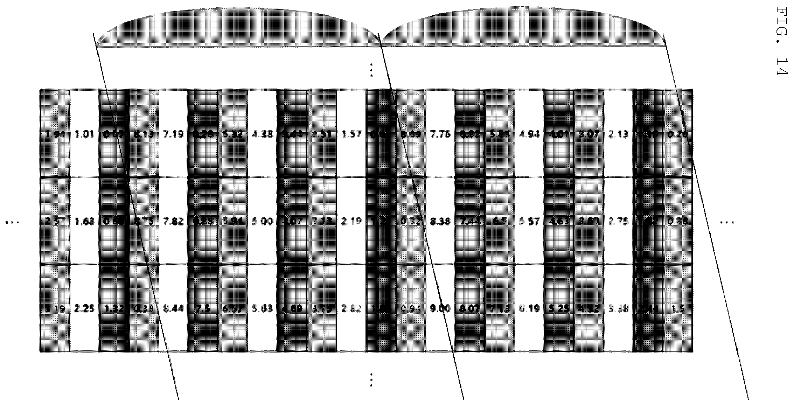

FIG. 13 illustrates a view image of a pixel having a specific number on a panel when the pixels are turned on, and FIG. 14 illustrates an example of view numbers of respective pixels of a display panel.

Each subpixel of the display panel may be assigned a view number. The view number assigned to each pixel does not necessarily have to be an integer. In addition, the number of views may be arbitrarily determined by the configurator. For example, the configurator may assign views from 1 to 9. FIG. 14 illustrates a case in which the number of views is 9.

In FIG. 14, two lenses are shown among a lenticular lens array which covers a display panel diagonally. When the lenticular lenses are stacked on the display panel, the number of views corresponding to each lens of the lenticular lens array is set to 9. One end and the other end of a single lens which covers the display panel are shown, and subpixels covered by one end and the other end of the single lens are divided into nine equal portions.

Setting one end and the other end of each lens in the lens array to "0" and "9", respectively, may determine the view numbers of the subpixels covered by the lens area from one end to the other end of the lens. That is, when a reference point is set at the center of the subpixel, the relative position of this reference point with respect to the distance from one end of the lens to the other may be determined as the view number.

Here, the view number assigned to each subpixel is displayed to two decimal places and, if the difference in view numbers equals to the difference in the number of views, the view numbers may be treated as the same numbers. Therefore, when one end and the other end of the lens are "0" and "9", respectively, the two ends may be considered the same numbers.

For example, in ...-9=0=9=27... or ...-4.7=4.3=13.3..., the view numbers "-9", "0", "9", and "27" differ by 9, which is the number of views, and thus may be treated as the same number. The view numbers "-4.7", "4.3", and "13.3" also differ by 9, which is the number of views, and thus may be treated as the same number.

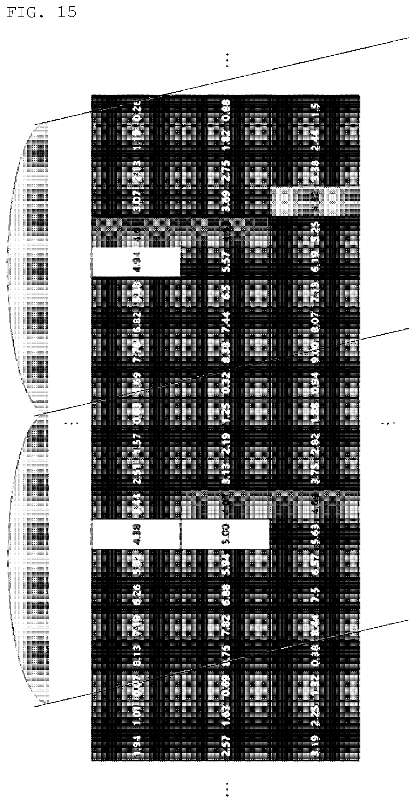

FIGS. 15 to 17 illustrate view image examples.

In some embodiments, an integer view number may be prepared to create a view image. In some embodiments, the integer view number may be determined by, for example, "rounding up" the view number.

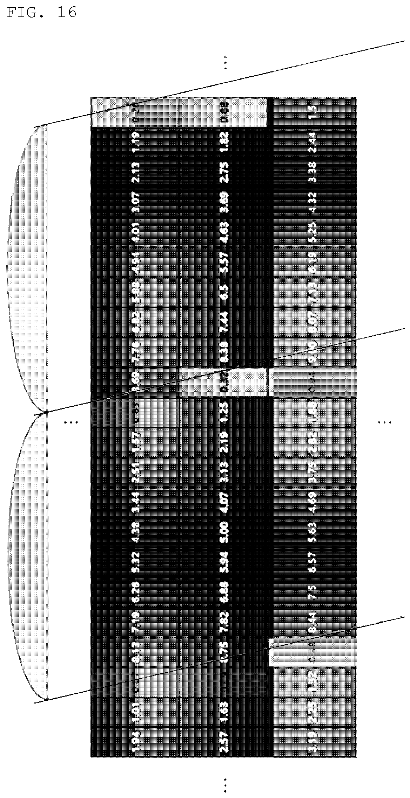

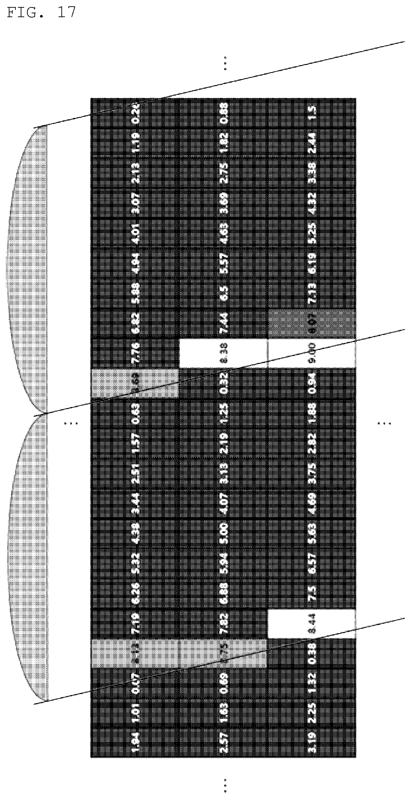

FIG. 15 illustrates, for example, a fifth view image, FIG. 16 illustrates a first view image, and FIG. 17 illustrates a ninth view image. In FIG. 15, when the view number is greater than 4.0 and less than or equal to 5.0, rounding up results in an integer view number of 5. FIG. 15 illustrates the appearance of the fifth view image where only the subpixels having a view number greater than 4.0 and less than or equal to 5.0 (where 4.0<view number≤5.0) are turned on.

In FIG. 16, when the view number is greater than 0.0 and less than or equal to 1.0, rounding up results in an integer view number of 1. FIG. 16 illustrates the appearance of the first view image where only the subpixels having a view number greater than 0.0 and less than or equal to 1.0 (where 0.0<view number≤1.0) are turned on.

In FIG. 17, when the view number is greater than 8.0 and less than or equal to 9.0, rounding up results in an integer view number of 9. FIG. 17 illustrates the appearance of the ninth view image where only the subpixels having a view number greater than 8.0 and less than or equal to 9.0 (where 8.0<view number≤9.0) are turned on. That is, the view image matching the corresponding integer number may be prepared.

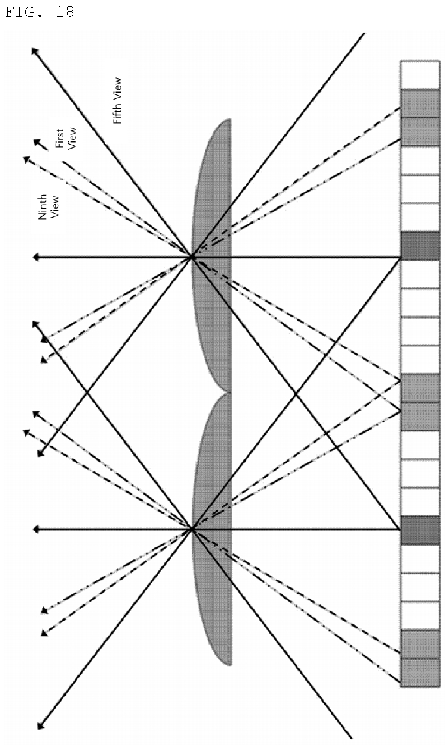

FIG. 18 illustrates light paths for view images according to embodiments of the disclosure.

A case where the number of views is 9 is shown. The light paths corresponding to the fifth view image, the first view image, and the ninth view image in the aforementioned embodiment are shown. Blue represents the fifth view, red represents the first view, and green represents the ninth view.

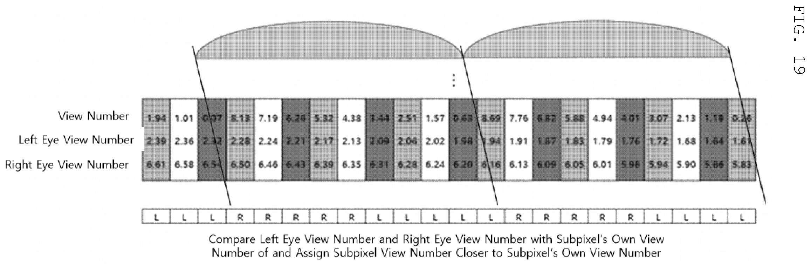

FIG. 19 illustrates a view mapping method according to embodiments of the disclosure. Each of the subpixels may have three view numbers. That is, each subpixel may have its own view number, a left-eye view number, and a right-eye view number. Its own view number may be determined based on the lens stacking position, while the left-eye and right-eye view numbers may be determined based on the eye positions of the driver. In FIG. 19, the first row representing the subpixels indicates the own view number of each subpixel, the second row indicates the left eye view number, and the third row indicates the right eye view number.

The view mapping method may include comparing a first value, i.e., a distance from the own view number of a subpixel to a left eye view number, with a second value, i.e., a distance from the own view number of the subpixel to a right eye view number and assigning the subpixel a view number closer to its own view number.

For example, a first value may represent the length from the own view number of the subpixel to the left eye view number, and a second value may represent the length from the own view number of the subpixel to the right eye view number. In this case, the first value and the second value may be compared and assignment to a view number having the shorter length may be performed.

For example, in the fourth column of FIG. 19, the own view number of the subpixel is 8.13, the left-eye view number is 2.28, and the right eye view number is 6.50. Therefore, because the second value (i.e., the distance from the own view number of the subpixel to the left eye view number) is smaller than the first value (i.e., the distance from the own view number of the subpixel to the left eye view number), the subpixel may be matched to the right eye. In FIG. 19, referring to the assignment table, subpixels from the first column to the third column are assigned to the left eye, and subpixels from the fourth column to the eighth column are assigned to the right eye.

Each view number may have a view image seen from the left or right eye of the user or driver at the eye position on the eye box 170 at a specific angle. Here, the view image may be reflected on the windshield 10 and distorted before appearing to the eyes of the user. That is, the light path is distorted, thereby causing a distorted image to be displayed to the eyes of the user. For each distorted view image, optical simulations or image capturing using the camera 300 may be performed according to the eye position, thereby obtaining view numbers having the correct view image. In the aforementioned example, the view number for the case entering the eyes of the user may be obtained. This view number may be expressed as V in this specification. In the aforementioned embodiment, a total of 9 view images are present.

The first function may be expressed by the following Equation.

[Equation 2]

$$f(Ex, Ey, Ez, Px, Py) = (V)$$

Like the first function described above, capturing images using the camera 300 or optical simulation may yield an output parameter V. At this point, because the eye position and the pixel position are known values, the five parameters of eye position (Ex, Ey, Ez) and pixel position (Px, Py) form a single parameter of view number (V) and a data set.

Here, the eye position (Ex, Ey, Ez) is assigned to the left or right eye for each subpixel. Reflecting the results assigned to the subpixels, the eye position may include the left eye position ($Ex_L$, $Ey_L$, $Ez_L$) and the right eye position ($Ex_R$, $Ey_R$, $Ez_R$).

Because Equation 2 for the left eye position is $f(Ex_L, Ey_L, Ez_L, Px, Py) = (V_L)$, the left eye view number $V_L$ is obtained from the left eye position. Equation 2 for the right eye position is $f(Ex_R, Ey_R, Ez_R, Px, Py) = (V_R)$, and the right eye view number ($V_R$) is obtained from the right eye position.

Like the first function, this dataset is generated for each marker 110 on the marker image 100, and thus the number of datasets obtained may be the same as the number of the markers 110 on the marker image 100. Therefore, in this embodiment, 135 data sets may be obtained because the marker image 100 includes 9*15 = 135 markers 110. For each data set, view numbers from 1 to 9 are applied, and thus the obtained data sets of the second function may be 9 times the data sets of the first function.

Using the datasets obtained in this manner, the second function, which is a regression equation, may be derived. For reference, because the output parameter is a single value of V, only one second function may be created for V.

As described above, the view numbers visible to the user may be implemented for the content corresponding to the left eye of the user and the content corresponding to the right eye of the user, respectively, through view mapping.

Once a total of three functions, including two first functions and one second function, are created, the processing unit may receive eye position information of the user in real time via an eye tracker and calculate the transformation position coordinates Wx and Wy and the view number V also in real time. Here, in a case where the view number is 5, the correct 3D image may be displayed to the eyes of the user when the view number 5 is activated for the pixels of the transformation position coordinates Wx and Wy.

When a video is played on the 3D HUD using the derived regression equations, warping and view mapping may be performed so that the user, i.e., the driver, may see a correct 3D image. At this time, in the warping and the view mapping, eye position data of the driver is received from the eye tracker, and a parallel processing device, such as a GPU, calculates the degree of warping and the view number to be assigned for each of the pixels on the display. The left image and the right image may be rendered to be visible to the left eye and the right eye of the driver, respectively.

According to the disclosure, because distortions in both the shape of the virtual object and the light path have been compensated for, the driver may see a correct 3D image without distortion.

The effectiveness of the distortion compensation method lines in different degrees of distortion in the shape or the light path depending on the viewing angle, thereby enabling a correct image to appear straight on a specific plane in space, regardless of the viewing angle, and the image to be accurately delivered to both the left and right eyes. When the differently distorted shapes are seen by both eyes, the image may not be perceived as a single object. When the images are not accurately projected to both eyes, the 3D image may not be viewed properly and may even cause dizziness. The distortion compensation method according to the disclosure may resolve these problems.

Furthermore, in the distortion compensation method according to the disclosure, warping and view mapping may be performed on a parallel processing device and may also be performed simultaneously. Accordingly, short execution time may be obtained, thereby resulting in the effect of low latency.

The above-described embodiments of the disclosure may be implemented in the form of computer programs executable on a computer using various components, and such computer programs may be stored in computer-readable media. Examples of the computer-readable media may include: magnetic media such as hard disks, floppy disks, and magnetic tapes; optical recording media such as CD-ROMs and DVDs; magneto-optical media such as floptical disks; and hardware devices such as ROM, RAM, and flash memory specifically configured to store program instructions and execute the program instructions.

In addition, the computer programs may be specifically designed and configured for the disclosure or may be known and available to a person having ordinary knowledge in the art of computer software. Examples of computer programs may include machine language code produced by compilers and high-level language code executable on computers using interpreters.

In the specification of the disclosure, the use of the term "the" and similar denoting terms may correspond to both singular and plural forms. Furthermore, recitation of ranges of values herein are intended merely to refer to respective separate values falling within the respective ranges and, unless otherwise indicated herein, the respective separate values are incorporated herein as if individually recited herein.

Finally, the operations of any method described herein may be performed in any suitable order unless otherwise indicated herein or otherwise clearly contradicted by the context. However, the operations shall not be limited to the described sequence. The use of any examples or illustrative languages (e.g., "such as") provided herein, is intended merely to better illustrate the disclosure and does not pose a limitation on the scope of the disclosure unless otherwise defined by the Claims. Furthermore, a person having ordinary knowledge in the art will appreciate that various modifications, combinations, and changes are possible according to design conditions and factors within the scope of the Claims or equivalents thereof.

Therefore, the spirit of the disclosure shall not be limited to the above-described embodiments, and the entire scope of the appended claims and equivalents thereof will fall within the scope and spirit of the disclosure.

<Description of Reference Numerals>

10: windshield 100: marker image 110: marker
150: distorted image 160: target image 170: eye box
200: HUD device 210: display panel A: viewpoint
P: point 300: camera

**Claims**

1. A method for compensating for distortion in HUD images, the method comprising:

   preparing a marker image comprising a plurality of markers displayed at selected positions on a display panel;
   obtaining an image through optical simulation or image capturing using a camera after reflecting the marker image on the windshield; and
   generating a warping function for calculating warping from the image.

2. The method of claim 1, wherein in the preparing of the marker image, the marker image comprises an image in which a plurality of markers are provided.

3. The method of claim 2, wherein the plurality of markers are arranged in a grid pattern at uniform distances from each other.

4. The method of claim 1, wherein the optical simulation or the image capturing using the camera is performed at a plurality of viewpoints.

5. The method of claim 4, wherein the plurality of viewpoints comprise viewpoints seen at a plurality of points positioned in a virtual eye box.

6. The method of claim 5, wherein the plurality of points are arranged in the eye box at uniform distances from each other.

7. The method of claim 1, wherein the warping function has, as input parameters, eye positions corresponding to a plurality of viewpoints in the optical simulation or the image capturing using the camera and pixel positions corresponding to the markers of the marker image and, as output parameters, compensated pixel positions corresponding to the image which is distortion-compensated.

8. The method of claim 7, wherein the compensated pixel position is implemented for content corresponding to the left eye of a user and for content corresponding to the right eye of the user.

9. The method of claim 1, wherein the warping comprises compensating for distortion in the shape of a virtual object visible to a user through the windshield.

10. The method of claim 1, comprising preparing a view image.

11. The method of claim 10, wherein the obtaining of the image comprises obtaining the image through the optical simulation or the image capturing using the camera after reflecting the marker image and the view image on the windshield.

12. The method of claim 11, comprising generating a mapping function for calculating view mapping from the image.

13. The method of claim 12, wherein the mapping function has, as input parameters, eye positions corresponding to a plurality of viewpoints in the optical simulation or the image capturing using the camera and pixel positions corresponding to the markers of the marker image and, as output parameters, a view number visible to eyes of a user.

14. The method of claim 13, wherein the view number visible to the eyes of the user is implemented for content corresponding to the left eye of the user and content corresponding to the right eye of the user, respectively.

15. The method of claim 12, wherein the view mapping comprises compensating for distortion in a path of light which enters the eyes of the user through the windshield.

16. The method of claim 10, wherein the view image comprises an image having subpixels which are turned on at specific periods.

17. The method of claim 16, wherein subpixels belonging to a same period among the subpixels have light paths which are tilted in different directions by a parallax barrier or lenticular lenses.

18. The method of claim 17, wherein the period and degrees of the tilts are determined in advance by the parallax barrier or the lenticular lenses.

19. An HUD device using the method of one of claims 1 to 18.

20. A computer program stored on a medium for executing, in combination with hardware, the method of one of claims 1 to 18.

FIG. 1

START

PREPARE MARKER IMAGE — S100

OBTAIN IMAGE — S110

GENERATE WARPING FUNCTION — S120

END

FIG. 2

```
                    ┌──────────────┐
                    │    START     │
                    └──────┬───────┘
                           │
                           ▼
        ┌──────────────────────────────┐         S100
        │    PREPARE MARKER IMAGE       │
        └──────────────┬───────────────┘
                       │
                       ▼
        ┌──────────────────────────────┐         S130
        │     PREPARE VIEW IMAGE        │
        └──────────────┬───────────────┘
                       │
                       ▼
        ┌──────────────────────────────┐         S110
        │         OBTAIN IMAGE          │
        └──────────────┬───────────────┘
                       │
                       ▼
        ┌──────────────────────────────┐         S120
        │   GENERATE WARPING FUNCTION   │
        └──────────────┬───────────────┘
                       │
                       ▼
        ┌──────────────────────────────┐         S140
        │   GENERATE MAPPING FUNCTION   │
        └──────────────┬───────────────┘
                       │
                       ▼
                ┌──────────────┐
                │     END      │
                └──────────────┘
```

FIG. 3

FIG. 4

```
┌─────────────────────┐
│        START        │
└─────────────────────┘
           │
           ▼
┌─────────────────────────────┐        S200
│     PREPARE VIEW IMAGE      │
└─────────────────────────────┘
           │
           ▼
┌─────────────────────────────┐        S230
│    PREPARE MARKER IMAGE     │
└─────────────────────────────┘
           │
           ▼
┌─────────────────────────────┐        S210
│        OBTAIN IMAGE         │
└─────────────────────────────┘
           │
           ▼
┌─────────────────────────────┐        S220
│  GENERATE MAPPING FUNCTION  │
└─────────────────────────────┘
           │
           ▼
┌─────────────────────────────┐        S240
│  GENERATE WARPING FUNCTION  │
└─────────────────────────────┘
           │
           ▼
┌─────────────────────┐
│        END          │
└─────────────────────┘
```

FIG. 5

```
            ┌─────────────┐
            │    START    │
            └─────────────┘
                   │
                   ▼                              ⌇ S300
      ┌────────────────────────────┐
      │    PREPARE MARKER IMAGE     │
      └────────────────────────────┘
                   │
                   ▼                              ⌇ S310
      ┌────────────────────────────┐
      │     PREPARE VIEW IMAGE      │
      └────────────────────────────┘
                   │
                   ▼                              ⌇ S320
      ┌────────────────────────────┐
      │        OBTAIN IMAGE        │
      └────────────────────────────┘
                   │
                   ▼                              ⌇ S330
      ┌────────────────────────────┐
      │     GENERATE FUNCTION      │
      └────────────────────────────┘
                   │
                   ▼
            ┌─────────────┐
            │     END     │
            └─────────────┘
```

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

| View Number | | | | | | | | | | | | | | | | | | | | | | | | | | |
|---|---|---|---|---|---|---|---|---|---|---|---|---|---|---|---|---|---|---|---|---|---|---|---|---|---|---|
| Left Eye View Number | 1.94 | 1.01 | 0.07 | 7.13 | 7.19 | 6.26 | 5.32 | 4.38 | 3.44 | 2.51 | 1.57 | 0.63 | 7.69 | 7.76 | 6.82 | 5.88 | 4.94 | 4.01 | 3.07 | 2.13 | 1.19 | 0.26 | ... |
| | 2.39 | 2.36 | 2.32 | 2.28 | 2.24 | 2.21 | 2.17 | 2.13 | 2.09 | 2.06 | 2.02 | 1.98 | 1.94 | 1.91 | 1.87 | 1.83 | 1.79 | 1.76 | 1.72 | 1.68 | 1.64 | 1.61 | |
| Right Eye View Number | 6.61 | 6.58 | 6.54 | 6.50 | 6.46 | 6.43 | 6.39 | 6.35 | 6.31 | 6.28 | 6.24 | 6.20 | 6.16 | 6.13 | 6.09 | 6.05 | 6.01 | 5.98 | 5.94 | 5.90 | 5.86 | 5.83 | |

| L | L | R | R | R | R | R | L | L | L | L | L | R | R | R | R | R | R | R | L | L | L |
|---|---|---|---|---|---|---|---|---|---|---|---|---|---|---|---|---|---|---|---|---|---|---|

Compare Left Eye View Number and Right Eye View Number with Subpixel's Own View Number of and Assign Subpixel View Number Closer to Subpixel's Own View Number

## INTERNATIONAL SEARCH REPORT

| International application No. |
|---|
| **PCT/KR2024/095958** |

| A. | CLASSIFICATION OF SUBJECT MATTER |
|---|---|

**G06T 5/80**(2024.01)i; **G02B 27/01**(2006.01)i; **G06T 3/18**(2024.01)i; **G06T 7/30**(2017.01)i

According to International Patent Classification (IPC) or to both national classification and IPC

| B. | FIELDS SEARCHED |
|---|---|

Minimum documentation searched (classification system followed by classification symbols)

G06T 5/80(2024.01); B60K 35/00(2006.01); G02B 27/00(2006.01); G02B 27/01(2006.01); G02B 30/00(2020.01); G06T 5/00(2006.01); G09G 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: HUD(head up display), 마커(marker), 이미지(image), 윈드실드(windshield), 반사 (reflection), 광학 시뮬레이션(optical simulation), 카메라(camera), 와핑(warping), 왜곡(distortion), 시점(view point), 뷰 이미지(view image)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2018-0024083 A (HYUNDAI AUTRON CO., LTD.) 08 March 2018 (2018-03-08) See paragraphs [0034]-[0036]; claims 1, 3 and 6; and figures 1-5. | 1-3,9,19-20 |
| Y | | 4-8,10 |
| A | | 11-18 |
| Y | JP 2021-015166 A (MAXELL HOLDINGS LTD.) 12 February 2021 (2021-02-12) See paragraphs [0080]-[0082]; claim 2; and figures 8B and 14. | 4-6 |
| Y | KR 10-2021-0096449 A (SAMSUNG ELECTRONICS CO., LTD.) 05 August 2021 (2021-08-05) See paragraph [0043]; claim 1; and figure 1. | 7-8,10 |
| A | KR 10-2020-0072641 A (SAMSUNG ELECTRONICS CO., LTD.) 23 June 2020 (2020-06-23) See paragraphs [0003]-[0011]; and claims 1-14. | 1-20 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2024** | **24 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/095958** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2017-0066749 A (HYUNDAI AUTRON CO., LTD.) 15 June 2017 (2017-06-15) See paragraphs [0011]-[0021]; and claims 1-6. | 1-20 |

Form PCT/ISA/210 (second sheet) (July 2022)

## INTERNATIONAL SEARCH REPORT
### Information on patent family members

International application No.

**PCT/KR2024/095958**

| Patent document cited in search report | | | Publication date (day/month/year) | Patent family member(s) | | | Publication date (day/month/year) |
|---|---|---|---|---|---|---|---|
| KR | 10-2018-0024083 | A | 08 March 2018 | None | | | |
| JP | 2021-015166 | A | 12 February 2021 | JP | 7221161 | B2 | 13 February 2023 |
| KR | 10-2021-0096449 | A | 05 August 2021 | US | 11436698 | B2 | 06 September 2022 |
| | | | | US | 2021-0233207 | A1 | 29 July 2021 |
| KR | 10-2020-0072641 | A | 23 June 2020 | US | 11226486 | B2 | 18 January 2022 |
| | | | | US | 2020-0192093 | A1 | 18 June 2020 |
| KR | 10-2017-0066749 | A | 15 June 2017 | None | | | |

Form PCT/ISA/210 (patent family annex) (July 2022)